Europäisches Patentamt

European Patent Office

Office européen des brevets

(19)

(11) **EP 0 928 435 B1**

(12) **EUROPÄISCHE PATENTSCHRIFT**

(45) Veröffentlichungstag und Bekanntmachung des Hinweises auf die Patenterteilung:
**14.05.2003 Patentblatt 2003/20**

(21) Anmeldenummer: **97909199.8**

(22) Anmeldetag: **26.09.1997**

(51) Int Cl.⁷: $G02B\ 26/02$, G02B 6/293

(86) Internationale Anmeldenummer:
**PCT/DE97/02196**

(87) Internationale Veröffentlichungsnummer:
**WO 98/013718 (02.04.1998 Gazette 1998/13)**

(54) **Optisches Mehrkanalfilterbauelement**

Optical Multichannel Filter Device

Dispositif à filtre optique à canaux multiples

(84) Benannte Vertragsstaaten:
**DE FR GB IT NL**

(30) Priorität: **27.09.1996 DE 19640002**
**25.07.1997 DE 19732130**

(43) Veröffentlichungstag der Anmeldung:
**14.07.1999 Patentblatt 1999/28**

(73) Patentinhaber: **Infineon Technologies AG**
**81669 München (DE)**

(72) Erfinder:
- **ALBRECHT, Helmut**
  **D-81377 München (DE)**
- **ROSENBERGER, Dieter**
  **D-82054 Sauerlach (DE)**
- **HEISE, Gerhard**
  **D-81739 München (DE)**
- **BAYERSDORFER, Bernhard**
  **D-84171 Baierbach (DE)**
- **MICHEL, Herbert**
  **D-81547 München (DE)**
- **REICHELT, Achim**
  **D-82008 Unterhaching (DE)**

(74) Vertreter: **Maikowski, Michael, Dipl.-Ing. Dr.**
**Patentanwälte**
**Maikowski & Ninnemann**
**Postfach 15 09 20**
**10671 Berlin (DE)**

(56) Entgegenhaltungen:
**EP-A- 0 711 092**          **WO-A-91/13377**
**DE-A- 3 716 836**

- **PATENT ABSTRACTS OF JAPAN vol. 006, no. 112 (P-124), 23.Juni 1982 & JP 57 042827 A (TOSHIBA CORP), 10.März 1982,**
- **MCGREER K A: "TUNABLE PLANAR CONCAVE GRATING DEMULTIPLEXER" IEEE PHOTONICS TECHNOLOGY LETTERS, Bd. 8, Nr. 4, 1.April 1996, Seiten 551-553, XP000587020 in der Anmeldung erwähnt**
- **PATENT ABSTRACTS OF JAPAN vol. 009, no. 026 (P-332), 5.Februar 1985 & JP 59 170815 A (HITACHI SEISAKUSHO KK), 27.September 1984,**

**Beschreibung**

Die Erfindung betrifft ein optisches Mehrkanalfilter-bauelement mit einer Koppelvorrichtung zum Koppeln von Licht zwischen zwei Wellenleiter-Endflächen eines optischen Mehrkanafilters.

Koppelvorrichtungen der genannten Art werden zum Einkoppeln von in einem optischen Wellenleiter zugeführtem Licht in einen anderen Wellenleiter verwendet. Ein Beiapiel ist eine Koppelvorrichtung zum Einkoppeln von Licht, das in einem streifenförmigen Wellenleiter, beispielsweise eine optische Faser, zugeführt ist, in einen streifen- oder schichtförmigen Wellenleiter, der auf einem Substrat integriert ist.

Beispielsweise kann der integrierte Wellenleiter ein Einkoppelwellenleiter eines optischen Mehrkanalfilters sein. Ein Beispiel für ein solches Filter ist ein Filter nach dem Phased-Array-Prinzip mit einer Einkoppelfläche in Form einer Endfläche des schichtförmigen integrierten Eingangswellenleiters dieses Filters, durch die an einer bestimmten geometrischen Position Licht in den Eingangswellenleiter eintritt, wobei die geometrische Position eine Ausgangswellenlänge des optischen Filters beeinflußt.

Derartige optische Filter nach dem Phased-Array-Prinzip werden insbesondere als Multiplexer oder Demultiplexer im optischen Wellenlängenmultiplex-Betrieb (WDM) eingesetzt, da sie eine geringe Einfügedämpfung und eine hohe Nebensprechunterdrückung aufweisen.

Ein optisches Filter nach dem Phased-Array-Prinzip weist als wesentlichen Bestandteil mehrere an den schichtförmigen Einkoppelwellenleiter angekoppelte und gekrümmt verlaufende optische Wellenleiter unterschiedlicher optischer Länge auf, die eine Phasenschieberanordnung bilden. Der schichtförmige Einkoppelwellenleiter verteilt das Licht auf die Wellenleiter unterschiedlicher optischer Länge.

In der WO 96/00915 A1 (GR 94 P 1417 DE) ist beschrieben, daß die Mittenwellenlänge eines Phased-Array-Filters durch die Position des zuführenden Wellenleiters, der das Licht in den Einkoppelwellenleiter des Filters leitet, festgelegt werden kann. Auf diese Weise kann durch die geometrische Positionierung der Endfläche des zuführenden streifenförmigen Wellenleiters in bezug auf die Endfläche des Einkoppelwellenleiters des Filters die Mittenwellenlänge dieses Filters genau justiert werden.

Nach der Justage der Mittenwellenlänge werden die Endfläche des zuführenden Wellenleiters und die Endfläche des Einkoppelwellenleiters des Filters relativ zueinander fixiert, beispielsweise dadurch, daß der zuführende Wellenleiter fest mit dem Substrat des Filters verklebt wird.

Bei herkömmlicher Bauweise eines solchen Filters sind Mittenwellenlänge und Kanalabstand durch das Layout des Filters und durch die Prozesstechnologie festgelegt.

Im Hinblick auf viele Anwendungen besteht ein Bedürfnis nach einem ab- oder durchstimmbaren Filter. Mit einem solchen Filter kann gezielt einer von mehreren Kanälen ausgewählt werden oder es kann die Mittenwellenlänge eines Filterkammes den Erfordernissen des Betriebs angepaßt werden, um beispielsweise die Alterung von Sendelasern zu kompensieren.

Als ab- oder durchstimmbare optische Filter werden abgesehen von klassischen Monochromatoren vorwiegend piezogesteuerte Fabry-Perot-Resonatoren auf dem Markt angeboten. Diese werden in mikromechanischer Bauweise hergestellt und sind aus diesem Grunde teuer und für die Massenherstellung und -anwendung nicht geeignet.

Mach-Zehnder-Interferometer lassen sich verstimmen {siehe N. Nakato et al.: "128-Channel Polarisation-Intensive Frequency-Selektion-Switch using High-Silica Waveguides on Si", IEEE Photonics Technology Letters 2, S. 441 (1990)), sind aber periodische Filter. Für schmalbandige Anwendungen ist deshalb eine Kaskadierung mehrerer aufeinander abgestimmter solcher Filter notwendig. Das Abstimmen eines derart aufgebauten Filters wird dabei sehr aufwendig, da zu diesem Zweck entsprechend viele Steuerströme geregelt werden müssen.

Phased-Array-Filter lassen sich im Prinzip dadurch abstimmen, daß die optische Weglänge in den einzelnen Wellenleitern des Phasenschieberbereichs dieses Filters verändert wird, beispielsweise mittels thermo- und/oder elektrooptischer Effekte (siehe EP 0 662 621 A1 (GR 94 P 1013 DE)).

Aus der DE-A1-3716836 ist ein Schalter für Lichtwellenleiter bekannt, bei welchem die Schaltstellung durch die Zustandsänderung eines oder mehrerer Piezo-Körper erreicht wird, die den örtlichen Verlauf der zu übertragenden Lichtwelle ändern.

Der im Anspruch 1 angegebenen Erfindung liegt die Aufgabe zugrunde, auf einfache Weise abstimmbare optische Mehrkanalfilter mit einem eine Endfläche aufweisenden streifen- oder schichtförmigen Einkoppelwellenleiter, insbesondere Phased-Array-Filter, bereitzustellen.

Diese Aufgabe wird durch die in Anspruch 1 angegebene Erfindung gelöst.

Vorteilhafterweise kann mit der Koppelvorrichtung eine bestimmte Ausgangswellenlänge des Filters, beispielsweise die Mittenwellenlänge eines Filterkammes, den Erfordernissen des Betriebs angepaßt werden, auch um beispielsweise die Alterung von Sendelasern zu kompensieren.

Eine solche Koppelvorrichtung ist prinzipiell nicht nur für derartige abstimmbare optische Mehrkanalfilter, darunter Mehrkanalfilter nach dem Spektrographen-Prinzip, sondern auch für optische Intensitätsmodulatoren und Wellenleiterschalter verwendbar.

Die Verschiebeeinrichtung der Koppelvorrichtung ist vorteilhafterweise in miniaturisierter Form realisierbar, d. h. in Abmessungen, die in der Größenordnung der Abmessungen der Wellenleiter-Endflächen liegen.

Die Koppelvorrichtung weist vorteilhafterweise einen kompakten Aufbau und deshalb hinreichende Stabilität auf, um zu gewährleisten, daß die Justierung eines streifenförmigen Wellenleiters bezüglich der Lage eines anderen Wellenleiters, insbesondere eines Schichtwellenleiters, erhalten bleibt und damit keine Verschlechterung der Einfügedämpfung stattfindet.

Die Koppelvorrichtung ermöglicht vorteilhafterweise eine automatische Nachregelung der relativen Position, welche die beiden Endflächen zueinander einnehmen, auf eine neue relative Position, die Sollposition, wenn die Umstände es erfordern.

Die Verschiebeeinrichtung ist bevorzugter- und vorteilhafterweise so ausgebildet, daß sich das Ausdehnungselement bezüglich eines relativ zu einer der beiden Endflächen festen Stützpunkts in einer Richtung parallel zur einen Endfläche ausdehnt und/oder kontrahiert und dabei die ändere Endfläche relativ zum festen Stützpunkt bewegt. Dadurch ist ein fester Bezugspunkt gegeben, an dem die Ausdehnung und/oder Kontraktion ausgerichtet wird. Die relativ zum festen Stützpunkt bewegte Endfläche kann die Endfläche eines Wellenleiters sein, in welchem das Licht der Koppelvorrichtung zugeführt wird, und/oder die Endfläche eines Wellenleiters, in welchem das Licht von der Koppel Vorrichtung fortgeleitet wird.

Die andere Endfläche ist vorteilhafterweise in einem parallel zur einen Endfläche bewegbaren Halterungskörper gehaltert, der fest mit dem Ausdehnungselement verbunden ist. Dabei ist es günstig, wenn der Halterungskörper und das Ausdehnungselement einstückig ausgebildet sind, da dadurch der Montageaufwand verringert wird.

Bevorzugter- und vorteilhafterweise besteht der Halterungskörper aus Keramikmaterial und weist eine durchgehende Öffnung auf, in welcher ein die andere Endfläche aufweisender Wellenleiter aufgenommen und fixiert ist.

Um zu verhindern, daß der Halterungskörper mit dem Ausdehnungselement um den Stützpunkt schwingen kann, ist es vorteilhaft, eine Führungseinrichtung zum linearen Führen des Halterungskörpers parallel zur einen Endfläche vorzusehen. Eine solche Führungseinrichtung weist vorzugsweise zwei einander gegenüberliegende und relativ zur einen Endfläche fest angeordnete Gleitflächen auf, zwischen denen der Halterungskörper angeordnet und längs welchen der Halterungskörper parallel zur einen Endfläche verschiebbar ist.

Bei einer bevorzugten und vorteilhaften Ausführungsform der Koppelvorrichtung ist die Verschiebeeinrichtung von außen steuerbar. Dazu ist diese Ausführungsform bevorzugterweise so ausgebildet, daß die Verschiebeeinrichtung eine Steuerungseinrichtung aufweist, mit welcher die Ausdehnung und/oder Kontraktion des Ausdehnungselements steuerbar ist.

Die derart steuerbare Koppelvorrichtung ist vorzugsweise so ausgebildet, daß das Ausdehnungselement aus piezoelektrischem Material besteht und die Steuerungseinrichtung ein auf das piezoelektrische Material einwirkendes elektrisches Feld mit gesteuert veränderbarer Feldstärke erzeugt, und/oder so, daß das Ausdehnungselement aus Material mit einem thermischen Ausdehnungskoeffizienten besteht und die Steuerungseinrichtung eine Einrichtung zum gesteuerten Erwärmen und/oder Kühlen des Ausdehnungselements aufweist.

Bei einer weiteren bevorzugten Ausführungsform einer steuerbaren Koppelvorrichtung weist die Verschiebeeinrichtung einen relativ zur einen Endfläche festen Stellmoror und ein Ausdehnungselement in Form eines mit der anderen Endfläche verbundenen und vom Stellmotor verschiebbaren Stellgliedes auf, und die Steuerungseinrichtung steuert den Stellmotor.

Ist der Positionsunterschied zwischen der relativen Istposition und relativen Sollposition im wesentlichen proportional zu einer in der Ümgebung der Koppelvorrichtung herrschenden Temperaturdifferenz, kann diese Koppelvorrichtung vorteilhafterweise so ausgebildet sein, daß die Kompensationseinrichtung aus einem Ausdehnungskoeffizienten besteht, und daß der thermische Ausdehnungskoeffizient und eine Abmessung des Ausdehnungselements parallel zu einer Endfläche relativ zueinander so gewählt sind, daß eine durch die Temperaturdifferenz hervorgerufene thermische Ausdehnung und/oder Kontraktion des Ausdehnungselements den Positionsunterschied im wesentlichen kompensiert.

Solche Verhältnisse liegen beispielsweise und wie schon angedeutet bei einem optischen Filter nach dem Phased-Array-Prinzip bezüglich einer Ausgangswellenlänge dieses Filters vor, deren Position temperaturabhängig ist.

Eine vorteilhafte Kompensationseinrichtung, die nicht nur temperaturbedingte, sondern auch anders, beispielsweise durch Wellenlängenänderungen bedingte Positionsunterschiede kompensieren kann, ist so ausgebildet, daß sie ein Ausdehnungselement aus piezoelektrischem Materialy eine Einrichtung zum Ermitteln des Positionsabstandes zwischen der relativen Istposition und relativen Sollposition und eine Steuerungseinrichtung zur Erzeugung einer auf das piezoelektrische Material einwirkenden und zum ermittelten Positionsunterschied derart proportionalen elektrischen Feldstärke aufweist, daß die von dieser Feldstärke erzeugte piezoelektrische Ausdehnung und/oder Kontraktion des Ausdehnungselements den Positionsunterschied im wesentlichen kompensiert.

Eine andere vorteilhafte Kompensationseinrichtung ist so ausgebildet, daß die Kompensationseinrichtung einen relativ zur einen Endfläche festen Stellmotor und ein Ausdehnungselement in Form eines mit der anderen Endfläche verbundenen und vom Stellmotor verschiebbaren Stellgliedes, eine Einrichtung zum Ermitteln des Positionsunterchiedes zwischen der relativen Istposition und relativen Sollposition und eine Steuerungseinrichtung zur Steuerung des Stellmotors in Abhängigkeit vom ermittelten Positionsunterchied derart aufweist, daß der Stellmotor den Positionsunterchied im wesentlichen kompensiert. Auch diese Ausführungsform kann nicht nur temperaturbedingte, sondern auch anders, beispielsweise durch Wellenlängenänderungen bedingte Positionsunterschiede kompensieren.

Bei einer Ausführungsform besteht das optische Mehrkanalfilter aus einem Filter nach dem Phased-Array-Prinzip, bei dem die Position der Mittenwellenlänge oder anderer Ausgangswellenlängen temperaturabhängig ist.

Bei einem Phased-Array-Filter im InGaAsP-Materialsystem beispielsweise steht die Temperaturabhängigkeit der Transmissionskurven von etwa 0,01 nm/k im $SiO_2$/Si-Materialsystem und etwa 0,1 nm/K einem erfolgreichen Systemeinsatz bisher im Wege. Im Einsatz können bei diesen optischen Filtern Temperaturdifferenzen von über 100K auftreten, wodurch bei Kanalabständen von nur wenigen Nanometern Probleme auftreten.

Damit ist ein optisches Filter nach dem Phased-Array-Prinzip realisierbar, das eine Einkoppelfläche aufweist, in die an einer bestimmten Position Licht eintritt, wobei die geometrische Position eine Ausgangswellenlänge bzw. Mittenwellenlänge des Filters beeinflußt, bei dem die Temperaturempfindlichkeit des Filters besonders zuverlässig und einfach ausgeglichen werden kann.

Bislang wurde zur Lösung dieses Problems eine aktive Temperaturregelung durchgeführt und eine gleichmäßige Temperatur im Filterbereich erzeugt. Hierfür ist jedoch ein zusätzlicher Spezifikations- und Überwachungsaufwand erforderlich.

Prinzipiell besteht auch die Möglichkeit, Filter aus Gläsern mit geringerem Temperaturkoeffizienten herzustellen. Diese benötigen jedoch einen erheblichen Entwicklungsaufwand.

In einer Ausgestaltung sind eine parallel zu der Einkoppelfläche des Filters nachverschiebbare Einrichtung zur Lichteinkopplung und ein temperatursensitives Element vorhanden und die verschiebbare Einrichtung ist in der Weise mit dem temperatursensitiven Element verbunden, daß die geometrische Position auf der Einkoppelfläche, an der Licht in das optische Filter eintritt, in Abhängigkeit von der Temperatur verschiebbar ist.

Auf diese Weise kann bei dem Phased-Array-Filter durch einfache mechanische Verschiebung einer Position zur Lichteinkopplung ein zuverlässiger Temperaturausgleich erzeugt werden, ohne daß eine aufwendige Kühlanlage oder Heizeinrichtung notwendig wäre.

Nach einer weiteren Ausgestaltung bestehen das temperatursensitive Element und die verschiebbare Einrichtung vorteilhafterweise im wesentlichen nur aus dem Kompensator, dessen Verschiebung auf eine thermische Längenausdehnung zurückgeht. Dadurch werden beide Funktionen von nur einem Element wahrgenommen, das darüber hinaus passiv arbeitet und keinerlei Überwachung benötigt.

Dabei ist es günstig, Abmessung, beispielsweise Länge, und Material des Kompensators in Abhängigkeit vom Temperaturkoeffizienten des optischen Filters auszulegen. Dies ist prinzipiell möglich, da sowohl der Temperaturkoeffizient eines Phased-Array-Filters als auch die Dispersion lineare Abhängigkeiten zeigen. Die ebenfalls lineare Ausdehnung des Kompensators kann daher durch Wahl des Materials und/oder der Abmessung des Kompensators in Richtung der Ausdehnung genau an das optische Filter angepaßt werden.

Der Kompensator ist günstigerweise mechanisch am optischen Filter befestigt, so daß ein fester Bezugspunkt gegeben ist, an dem die Verschiebung ausgerichtet werden kann. Die verschiebbare Einrichtung zur Lichteinkopplung weist bevorzugt eine Einkoppelfaser mit einer Halterung auf. Günstigerweise sind der Kompensator und die Halterung für die Einkoppelfaser einstückig aus einem geeigneten Material ausgebildet, da dadurch der Montageaufwand verringert wird.

Um zu verhindern, daß die Einkoppelfaser mit dem Kompensator um den Befestigungspunkt schwingen kann, ist es vorteilhaft, eine mechanische Führung für den Kompensator und die Halterung für die Einkoppelfaser vorzusehen. Eine solche mechanische Führung weist bevorzugt eine Deckplatte und ein oder zwei Stützen auf, die aus Materialien mit angepaßten Ausdehnungskoeffizienten bestehen. Der Kompensator und die daran befestigte Halterung mit der Einkoppelfaser verschieben sich dann, von der Deckplatte und einer Basisplatte geführt, definiert in einer Richtung.

Aufgrund der Koppelvorrichtung ist eine andere bevorzugte Ausführungsform des Filters realisierbar, bei dem das temperatursensitive Element einen Temperaturfühler mit einer elektrischen Ausgabe und die verschiebbare Einrichtung einen elektrisch steuerbaren Schrittmotor aufweist. Ebenso kann die verschiebbare Einrichtung einen Piezokristall aufweisen, Durch eine solche Anordnung kann ebenfalls in Abhängigkeit von der Temperatur eine Einkoppelfaser definiert auf der Einkoppelfläche verschoben werden, so daß die Temperaturabhängigkeit des optischen Filters ausgeglichen wird.

Die Erfindung ist nicht auf Filter nach dem Phased-Array-Prinzip beschränkt. Das optische Filter kann beispielsweise ein integriert optisches Mehrkanalfilter nach dem Spektrographen-Prinzip sein.

Bei einem solchen Filter wird das in einem Schichtwellenleiter geführte Licht an einem in den Wellenleiter eingebrachten Reflexionsgitter gebeugt und gleichzeitig von einer Einkoppelstelle auf eine Auskoppeistelle abgebildet, deren Position wellenlängenabhängig ist. Wird die Einkoppelstelle in bezug auf eine Einkoppelendfläche verschoben, so wandert die Position der Auskoppelstellen entsprechend der optischen Abbildung mit, so daß auch hier ähnlich wie beim Filter nach dem Phased-Array-Prinzip eine Feinabstimmung der Wellenlängenkanäle über die Position möglich ist.

Wird das integriert optische Filter nach dem Spektrographen-Prinzip beispielsweise nach dem sog. Flatfield-Prinzip entworfen, können zur Abstimmung grundsätzlich auch Auskoppelwellenleiter bewegt werden. In diesem Fall ist eine Koppelvorrichtung gegenüber einer Auskoppelendfläche des Wellenleiters anzuordnen, aus der Licht aus dem Filter ausgekoppelt wird.

Die Möglichkeit, Gitterspektrographen durch Verschiebung von Ein- und Auskoppelwellenleitern abzustimmen, wurde in K. A. McGreer: "Nunable Planar Concave Grating Demultiplexer", IEEE Photonics Technology Letters 8, S. 551 (1996) veröffentlicht.

Die Koppelvorrichtung kann prinzipiell in allen optischen Einrichtungen eingesetzt werden, bei denen Wellenleiter-Endflächen zweier oder mehrerer optischer Einrichtungen angewendet werden, bei denen Wellenleiter zum Ein- und/oder Auskoppeln von Licht zwischen diesen Wellenleitern einander gegenüberliegen und bei denen eine relative Verschiebung zwischen den Endflächen parallel zu einer Endfläche erwünscht oder notwendig ist.

Eine Ausführungsform der Koppelvorrichtung ist so ausgebildet, daß die endflächen einander gegenüberliegende Endflächen streifenförmiger optischer Wellenleiter sind, die im wesentlichen den gleichen Querschnitt aufweisen. Die streifenförmigen Wellenleiter können optische Fasern und/oder integrierte streifenförmige Wellenleiter sein, deren Querschnitt im Unterschied zu Schichtwellenleitern nicht langgestreckt ist, sondern im wesentlichen gleiche Höhe und Breite aufweist.

Mit einer derartigen Koppelvorrichtung ist in Verbindung mit einer Steuerungseinrichtung ein einstellbarer optischer Abschwächer realisierbar, bei dem die Koppeldämpfung zwischen zwei streifenförmigen Wellenleitern, deren Endflächen einander gegenüberliegen, mit zunehmendem seitlichem Versatz der beiden Endflächen relativ zueinander kontrolliert ansteigt.

Mit einer derartigen Koppelvorrichtung ist vorteilhafterweise auch ein Wellenleiterschalter realisierbar, dessen Wirkungsweise dem des Abschwächers analog ist. Eine bevorzugte Ausführungsform zu diesem Zweck ist so ausgebildet, daß gegenüber der Endfläche eines streifenförmigen Wellenleiters nebeneinander angeordnete Endflächen zweier oder mehrerer anderer streifenförmiger Wellenleiter angeordnet sind und die Verschiebeeinrichtung derart ausgebildet ist, daß die Endfläche des einen streifenförmigen Wellenleiters und die Endflächen der anderen streifenförmigen Wellenleiter relativ zueinander um zumindest einen Abstand zwischen benachbarten Endflächen der anderen streifenförmigen Wellenleiter verschiebbar sind.

Durch diese Maßnahme ist es möglich, die Endfläche des einen streifenförmigen Wellenleiters wahlweise in Gegenüberlage mit der Endfläche eines anderen streifenförmigen Wellenleiters oder der Endfläche eines weiteren anderen streifenförmigen Wellenleiters zu bringen. Die Verschiebeeinrichtung ist lediglich so zu bemessen, daß bei der relativen Verschiebung der Endflachen zumindest der Abstand zweier benachbarter Endflächen der anderen streifenförmigen Wellenleiter überbrückt werden kann.

Nachfolgend wird die Erfindung anhand eines in der Zeichnung dargestellten Ausführungsbeispiels weiter erläutert. Im einzelnen zeigen die schematischen Darstellungen in:

Figur 1     eine Draufsicht auf ein erstes Ausführungsbeispiel einer Koppelvorrichtung;

Figur 2     eine Seitenansicht des Ausführungsbeispiels nach Figur 1;

Figur 3     ein Ausführungsbeispiel einer mechanischen Führung für die Koppelvorrichtung;

Figur 4     ein weiteres Ausführungsbeispiel einer mechanischen Führung für die Koppelvorrichtung;

Figur 5     eine Draufsicht auf ein zweites Ausführungsbeispiel einer Koppelvorrichtung;

Figur 6     eine Draufsicht auf ein drittes Ausführungsbeispiel einer Koppelvorrichtung;

Figur 7     eine Draufsicht auf ein viertes Ausführungsbeispiel einer Koppelvorrichtung;

Figur 8     eine Draufsicht auf ein Beispiel eines mit einer Koppelvorrichtung realisierten optischen Abschwächers;

Figur 9     eine Draufsicht auf ein Beispiel eines mit einer Koppelvorrichtung realisierten Wellenleiterschalters;

Figur 10     eine Draufsicht auf ein optisches Filter nach dem Phased-Array-Prinzip nach einer Ausgestaltung der Erfindung, bei dem das erste Ausführungsbeispiel der Koppelvorrichtung eingesetzt ist; und

Figur 11     eine Draufsicht auf ein optisches Filter nach dem Spektrographen-Prinzip, bei dem eine Koppelvorrichtung einsetzbar ist.

Bei den in den Figuren dargestellten optischen Koppelvorrichtungen sind die beiden einander gegenüber angeordneten Wellenleiter-Endflächen zum Koppeln von Licht zwischen den beiden Endflächen mit 4 und 4' und die Verschiebesinrichtung zum Verschieben der beiden Endflächen 4 und 4' relativ zueinander parallel zu einer Endfläche 4 und/oder 4' mit 100 bezeichnet.

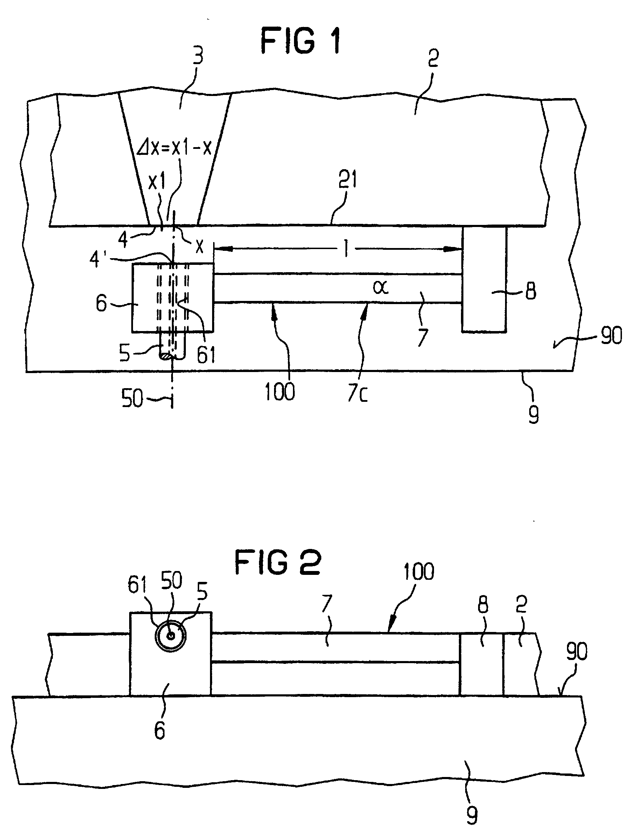

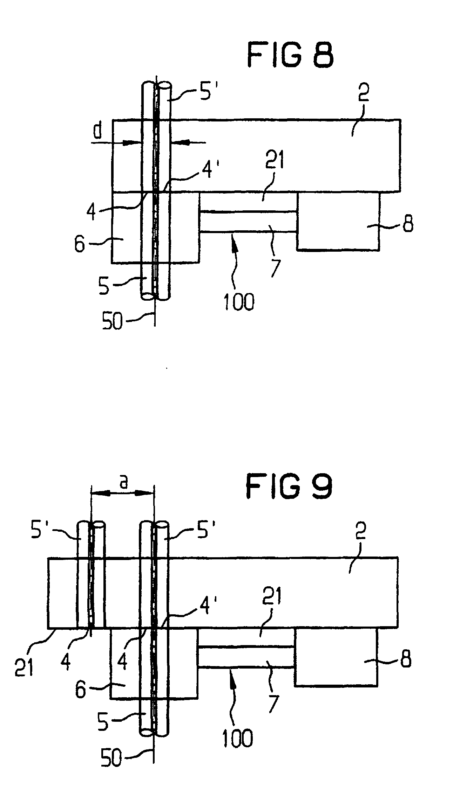

Bei den in den Figuren 1 und 2 und Figur 5 bis 7 dargestellten Ausführungsformen ist beispielsweise die Endfläche 4 eine Endfläche, eines auf einem Substrat 2 ausgebildeten Schichtwellenleiters 3 und die andere Endfläche 4' eine Endfläche eines streifenförmigen Wellenleiters 5 in Form einer optischen Faser, beispielsweise einer Kern-Mantel-Faser. Bei den Ausführungsformen nach Figur 8 und Figur 9 ist die Endfläche 4 eine Endfläche eines streifenförmigen Wellenleiters 5', beispielsweise ebenfalls eine optische Faser.

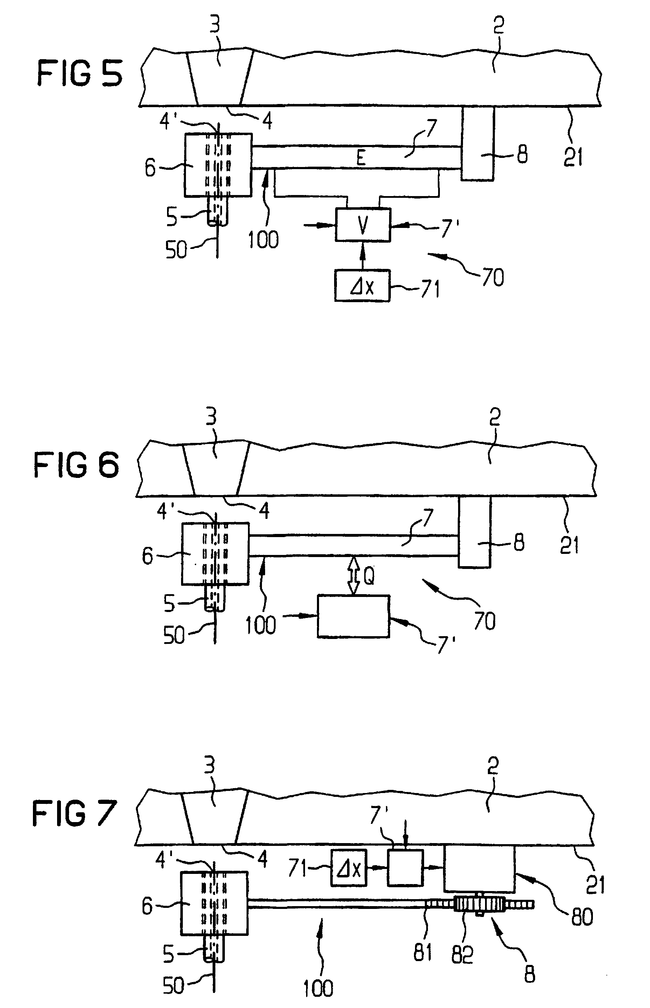

Die Verschiebeeinrichtung 100 weist ein Ausdehnungselement auf, das die Endflächen 4 und 4' aufgrund einer räumlichen Ausdehnung und/oder Kontraktion des Elements relativ zueinander bewegt und bei allen Ausführungsformen mit Ausnahme der Ausführungsform nach Figur 7 mit 7 bezeichnet ist. Bei der Ausführungsform nach Figur 7 mit ist das Ausdehnungselement mit 81 bezeichnet.

Bei allen Ausführungsformen ist beispielsweise die Endfläche 4' des streifenförmigen Wellenleiters 5 relativ zur festen Endfläche 4 des anderen Wellenleiters 3 oder 5' beweglich, wobei bei den Ausführungsformen mit dem Ausdehnungselement 7 dieses Element 7 an einem relativ zur festen Endfläche 4 festen Stützpunkt 8 abgestützt und die bewegliche Endfläche 4' durch eine zur festen Endfläche 4 parallele Ausdehnung und/oder Kontraktion des Ausdehnungselements 7 relativ zum festen Stützpunkt 8 und damit zur Endfläche 4 bewegbar ist.

Die bewegliche Endfläche 4' ist mit dem streifenförmigen Wellenleiter 5 in einem parallel zur festen Endfläche 4 bewegbaren Halterungskörper 6 gehaltert, der fest mit dem Ausdehnungselement 7 verbunden ist, wobei der Halterungskörper 6 und das Ausdehnungselement 7 einstückig ausgebildet sein können.

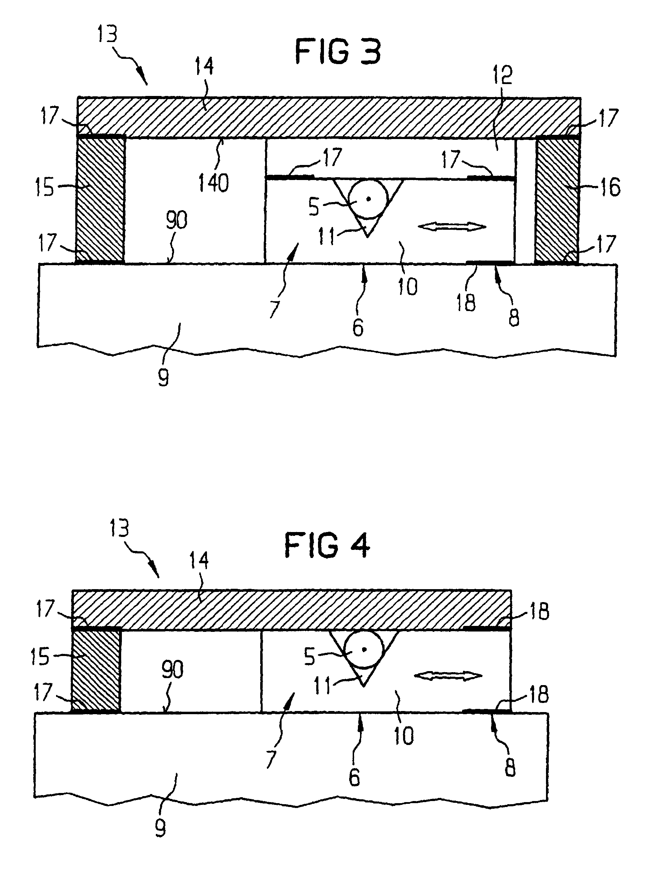

Der Halterungskörper 6 kann beispielsweise (siehe Figuren 3 und 4) ein Unterteil 10 mit einer Kerbe 11 aufweisen, in welcher der streifenförmige Wellenleiter 5 vollständig aufgenommen ist und deren Oberseite von einem Oberteil 12 oder 14 abgedeckt ist, wobei Oberteil 12 oder 14 und Unterteil 10 verklebt oder verlötet sein können.

Bei einer bevorzugten Ausführungsform ist der Halterungskörper 6 einstückig und weist eine durchgehende Öffnung 61 (Figuren 1 und 2) auf, in welcher der die bewegliche Endfläche 4' aufweisende streifenförmige Wellenleiter 5 aufgenommen und fixiert ist. Der einstückige Halterungskörper 6 besteht vorzugsweise aus Keramikmaterial.

Der Halterungskörper 6 ist zur Vermeidung von Schwingungen durch eine Führungseinrichtung parallel zur festen Endfläche 4 linear geführt.

In den Figur 3 und 4 sind zwei Ausführungsformen einer solchen Führungseinrichtung dargestellt, die in diesen Figuren mit 13 bezeichnet ist.

Bei beiden Ausführungsformen weist die Führungseinrichtung 13 zwei einander gegenüberliegende und relativ zur festen Endfläche 4 fest angeordnete Gleitflächen 90 und 140 auf, zwischen denen der Halterungskörper 6 angeordnet und längs weichen der Halterungskörper 6 parallel zur festen Endfläche 4 verschiebbar ist.

Eine Gleitfläche ist beispielsweise die Oberfläche 90 einer Basisplatte 9, auf welcher Oberfläche 90 das Substrat 2 angeordnet ist und relativ zu welcher die feste Endfläche 4 in einem Winkel von beispielsweise annähernd 90° steht, und die andere Gleitfläche ist beispielsweise eine der Oberfläche 90 zugekehrte Oberfläche 140 einer Deckplatte 14, die durch Stützen 15 und 16 im Abstand von der Basisplatte 9 gehalten ist. Die Stützen 15 und 16 sind mit der Deckplatte 14 und der Basisplatte 9 an Verbindungsstellen 17 verklebt oder verlötet.

Bei beiden Ausführungsformen ist das Ausdehnungselement 7 an einer vom Halterungskörper 6 entfernt liegenden Verbindungsstelle 18 fest mit der Oberfläche 90 verbunden, beispielsweise verklebt oder verlötet. Diese Verbindungsstelle 18 definiert einen festen Stützpunkt 8 an welchem das Ausdehnungselement 7 fest abgestützt ist und relativ zu dem der Halterungskörper 6 durch eine zur festen Endfläche 4 parallele Ausdehnung und/oder Kontraktion des Ausdehnungselements 7 relativ zum Stützpunkt 8 bewegbar ist.

Bei der Ausführungsform nach Figur 3 ist das Ausdehnungselement 7 nur mit der Oberfläche 90 und nicht mit der Oberfläche 140 fest verbunden. Der Halterungskörper 6 besteht aus dem auf der Oberfläche 90 gleitenden Unterteil 10 mit einer Kerbe 11 zur Aufnahme des streifenförmigen Wellenleiters 5 und dem an der Oberfläche 140 gleitenden Oberteil 12, und das Unterteil 10 und das Ausdehnungselement 7 bestehen hier aus einem Stück eines geeigneten Materials, um den Montageaufwand zu verringern. Die Deckplatte 14 und die Stützen 15 und 16 bestehen aus Materialien, deren thermischer Ausdehnungskoeffizient gegenüber dem Ausdehnungselement 7 angepaßt sind.

Bei der Ausführungsform nach Figur 4 ist der Halterungskörper 6 einstückig und besteht nur aus einem Unterteil 10 mit einer Kerbe 11 zur Aufnahme des Streifenförmiger Wellenleiters 5 das sowohl auf der Oberfläche 90 als auch an der Oberfläche 140 der Deckplatte 14 gleitet. Außerdem ist nur eine Stütze 15 vorgesehen und die Funktion der zweiten Stütze wird vom Ausdehnungselement 7 übernommen, das nicht nur an einer Verbindungsstelle 18 fest mit der Oberfläche 90, sondern an einer dieser Verbindungsstelle 18 gegenüberliegenden Verbindungsstelle 18 fest mit der Oberfläche 140 der Deckplatte 14 verbunden, beispielsweise verklebt oder verlötet ist. Die beiden Verbindungsstellen 18 definieren gemeinsam einen festen Stützpunkt 8 an welchem das Ausdehnungselement 7 fest abgestützt ist und relativ zu dem der Halterungskörper 6 durch eine zur festen Endfläche 4 parallele Ausdehnung und/oder Kontraktion des Ausdehnungselements 7 relativ zum Stützpunkt 8 bewegbar ist. Die Ausführungsform nach Figur 4 ist also gegenüber der nach Figur 3 weiter vereinfacht.

In den Figuren 1 und 2 ist eine erste Ausführungsform einer optischen Koppelvorrichtung dargestellt, bei der auf einem Substrat 2 ein Schichtwellenleiter 3 mit einer der Endfläche 4 ausgebildet ist, die sich unmittelbar an einer Kante 21 des substrats 2 befindet, Unmittelbar benachbart an der Einkoppelfläche 4 ist eine optische Faser 5 mit der Endfläche 4' angeordnet, die der Endfläche 4 gegenüberliegt.

Die Faser 5 ist in dem Halterungskörper 6 gehaltert, der parallel zur Endfläche 4 des Schichtwellenleiters 3 und damit auch zur Kante 21 des Substrats 2 verschiebbar ist.

Der Halterungskörper 6 ist einstückig aus Keramikmaterial gefertigt und weist ein durchgehendes Loch 61 auf, in welchem die Faser 5 aufgenommen und fixiert ist. Er ist am Ausdehnungselement 7 befestigt, das wiederum über den Stützpunkt 8 relativ zum Substrat 2 fixiert ist. Hier ist der Stützpunkt 8 beispielsweise durch einen stützkörper definiert, der fest mit dem Substrat 2 und/oder der Basisplatte 9 verbunden ist und an dem sich das Ausdehnungselement 7 abstützt.

Das Ausdehnungselement 7 besteht aus Material mit einem thermischen Ausdehnungskoeffizienten $\alpha$, und eine Temperaturänderung $\Delta T$ ruft eine thermische Ausdehnung und/oder Kontraktion des Ausdehnungselements 7 parallel zur Kante 21 des Substrats und damit zur Endfläche 4 hervor. Entsprechend dieser Ausdehnung und/oder Kontraktion werden der Halterungskörper 6 und mit ihm die Endfläche 4' parallel zur Endfläche 4 hin- oder herverschoben.

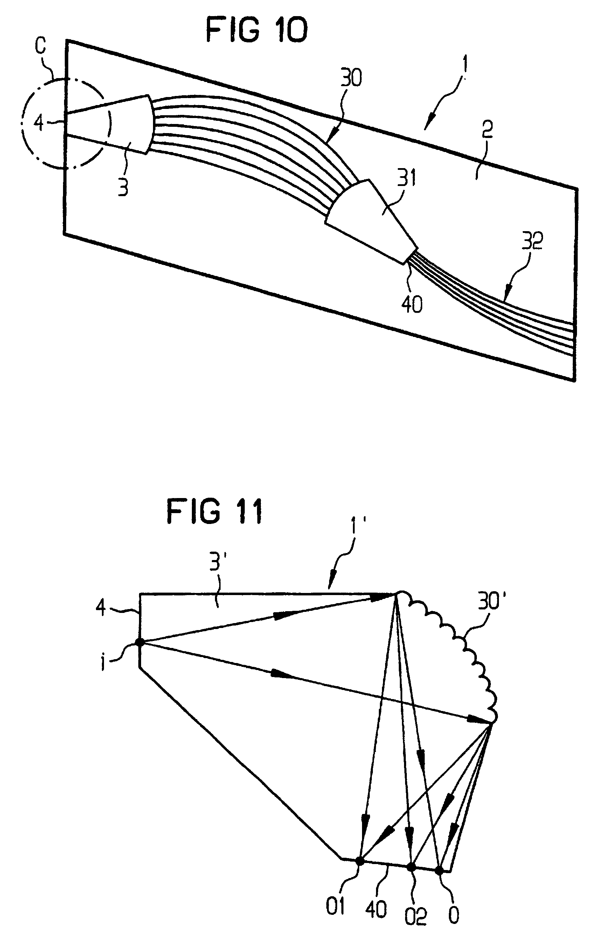

Speziell ist bei der Ausführungsform nach den Figuren 1 und 2 der Schichtwellenleiter 3 ein Einkoppelwellenleiter eines in der Figur 10 dargestellten optischen Filters 1 nach dem Phased-Array-Prinzip. Durch die Endfläche 4 dieses Einkoppelwellenleiters 3 wird Licht in den Wellenleiter 3 eingekoppelt und im Wellenleiter 3 zu einer Phasenschieberanordnung 30 geleitet. Das aus der Phasenschieberanordnung 30 austretende Licht wird in einen Ausgangswellenleiter 31 in Form eines Schichtwellenleiters des Filters 1 eingekoppelt und in diesem einer Endfläche 40 dieses Wellenleiters 31 zugeführt, aus der dieses Licht auskoppelbar ist. Dabei ist jeder Wellenlänge bzw. jedem Wellenlängenkanal des in das Filter 1 eingekoppelten Lichts je eine eigene geometrische Position in der Endfläche 40 des Auskoppelwellenleiters 31 zugeordnet, auch einer Mittenwellenlänge des Filters 1, um die sich die übrigen Wellenlängen gruppieren.

Die Position der Mittenwellenlänge und mit ihr die Positionen der übrigen Wellenlängen in der Endfläche 40 des Auskoppelwellenleiters 31 hängen zum einen von der geometrischen Position, bei der die Mittenwellenlänge in die Endfläche 4 des Einkoppelwellenleiters 3 in das Filter 1 eingekoppelt wird, zum andern von der Temperatur T des Filters 1 ab, d.h. bei in der Endfläche 4 des Einkoppelwellenleiters 3 beibehaltener Position verändert sich bei einer Temperaturänderung $\Delta T$ des Filters 1 die Position der Mittenwellenlänge in der Endfläche 40 des Auskoppelwellenleiters 31.

Die Koppelvorrichtung ermöglicht nun vorteilhafterweise die Realisierung eines abstimmbaren Filters 1 nach dem Phased-Array-Prinzip beispielsweise insofern, als

a) das in das Filter 1 einzukoppelnde Licht durch den streifenförmigen Wellenleiter 5 zugeführt und aus der Endfläche 4' dieses Wellenleiters 5 der Endfläche 4 des Einkoppelwellenleiters 3 des Filters 1 zugeführt und durch diese Endfläche 4 in das Filter 1 eingekoppelt wird, und

b) die Endfläche 4' des streifenförmigen Wellenleiters 5 relativ zur Endfläche 4 des Einkoppelwellenleiters 3 gezielt so verschoben wird, daß die Mittenwellenlänge diese Endfläche 4 in einer Position trifft, der eine gewünschte Position der Mittenwellenlänge $\lambda$ in der Endfläche 40 des Auskoppelwellenleiters 31 des Filters 1 zugeordnet ist und/oder

c) die Endfläche 4' des streifenförmigen Wellenleiters 5 bei einer Temperaturänderung $\Delta T$ des Filters 1 relativ zur Endfläche 4 des Einkoppelwellenleiters 3 so verschoben wird, daß die Mittenwellenlänge nach der Temperaturänderung $\Delta T$ diese Endfläche 4 nunmehr in einer Position trifft, der die ursprüngliche Position der Mittenwellenlänge vor der Temperaturänderung $\Delta T$ zugeordnet ist. wodurch die durch die Temperaturänderung $\Delta T$ verursachte Änderung der Position der Mittenwellenlänge in der Endfläche 40 des Ausgangswellenleiters 31 des Filters 1 kompensiert wird.

Das für die Mittenwellenlänge beschriebene gilt in gleicher Weise für jede der übrigen Wellenlängen.

Die Figur 1 stellt den Bereich des abstimmbaren Filters 1 nach Figur 10 innerhalb des Kreises C vergrößert dar.

Als Position, in der eine in das Filter 1 einzukoppelnde Wellenlänge die Endfläche 4 trifft, kann der Punkt x genommen werden, bei dem die Achse des aus der Endfläche 4' austretenden und durch die Endfläche 4 einzukoppelnden Lichtstrahls die Endfläche 4 trifft. Der Einfachheit halber ist bei den dargestellten Beispielen angenommen, daß diese Achse mit der Achse 50 des streifenförmigen Wellenleiters 5 zusammenfällt.

Demnach ist unter relativer Position x, d.h. unter der geometrischen Position x, welche die beiden Endflächen 4 und 4' relativ zueinander einnehmen, der Punkt x zu verstehen, bei dem die Achse des aus einer der beiden Endflächen austretenden Lichtstrahls die andere Endfläche trifft.

Unter relativer Istposition ist die tatsächlich eingenommene relative Position und unter relativer Sollposition die relative Position zu verstehen, die eingenommen werden soll oder gewünscht ist.

Beim Beispiel nach den Figuren 1 und 2 weist die Verschiebeeinrichtung 100 eine Kompensationseinrichtung 70 zur Kompensation eines Positionsabstandes $\Delta x$ zwischen einer relativen Istposition x und einer relativen Sollposition x1, welche eingenommen werden soll, auf.

Diese Kompensationseinrichtung 70 besteht aus einem Ausdehnungselement 7 aus Material mit einem thermischen Ausdehnungskoeffizienten $\alpha$, und der thermische Ausdehnungskoeffizient $\alpha$ und die Abmessung L des Ausdehnungselements 7 in Richtung parallel zur Kante 21 des Substrats 2 sind so gewählt, daß eine durch die Temperaturänderung $\Delta T$ hervorgerufene thermische Ausdehnung und/oder Kontraktion des Ausdehnungselements 7 parallel zur Kante 21 des Substrats 2 den Positionabstand $\Delta x$ im wesentlichen kompensiert. Diese thermische Ausdehnung und/oder Kontraktion des Ausdehnungselements 7 verschiebt den Halterungskörper 6 und damit die Endfläche 4' relativ zum Stützpunkt 8 und damit zur Endfläche 4 in Abhängigkeit von der Temperatur T parallel zur Kante 21 des Substrats 2 automatisch so, daß die Position der Mittenwellenlänge in der Endfläche 40 des Auskoppelwellenleiters 31 des Filters 1 erhalten bleibt und unabhängig von der Temperatur T ist.

Darüber hinaus kann durch die Wahl eines anderen Kompensators der Temperaturgang des Filters zum Beispiel an den von Laserdioden angepaßt werden.

Die Wahlmöglichkeiten der Abmessung L und des Materials des Ausdehnungselements 7 seien mit folgendem Beispiel verdeutlicht.

Ein beispielhafter Temperaturkoeffizient eines Phased-Array-Filters in $SiO_2$-Si-Technik beträgt:

$$\Theta_{PA} = \frac{d\lambda}{dT} \approx 0{,}01 \ \frac{nm}{K}$$

Die Dispersion eines solchen Phased Arrays beträgt dann beispielsweise:

$$D = \frac{d}{dx} = \frac{3{,}2nm}{20\mu m} = 0{,}16nm / \mu m$$

Die so von dem Phased-Array-Filter vorgegebene Temperaturabhängigkeit muß durch die Ausdehnung und/oder Kontraktion des Ausdehnungselements 7 in Richtung parallel zur Kante 21 des Substrats 2 ausgeglichen werden, die sich nach der Formel

$$\Delta x = \alpha \cdot L \cdot \Delta T$$

berechnet. Dabei ist $\alpha = (\alpha s - \alpha k)$ die Differenz zwischen der Ausdehnung und/oder Kontraktion des Substrats 2, also die von Silizium ($\alpha s = 2{,}33 \cdot 10^{-6} 1/K$) und dem Material $\alpha_k$ des Ausdehnungselements 7 in Richtung parallel zur Kante 21 des Substrars 2. Hieraus ergibt sich die Forderung:

$$\alpha \cdot L = \Theta_{PA}/D \approx 0{,}0625\mu m/K$$

Nimmt man für das Ausdehnungselement 7 zum Beispiel BK7 Glas mit $\alpha_k = 7.1 \ 10^{-6} \ 1/K$, so ergibt sich eine Abmessung L von 13,1 mm in Richtung parallel zur Kante 21. Bei Verwendung von Materialien mit höheren Ausdehnungskoeffizienten verkürzt sich diese Abmessung L entsprechend. Bei Aluminium ist $\alpha_k = 25 \cdot 10^{-6} 1/K$, so daß diese Abmessung L nur 2,7 mm betragen muß.

Der Figur 2, welche die Koppel Vorrichtung nach Figur 1 in Seitenansicht mit Blickrichtung auf die Kante 21 des Substrats 2 zeigt, ist zu entnehmen, daß das Substrat 2, in welchem der Einkoppelwellenleiter 3, die Phasenschieberanordnung 30, der Auskoppelwellenleiter 31 und eine an die auskoppelseitige Endfläche 40 des Auskoppelwellenleiters 31 angekoppelte Anordnung 32 aus streifenförmigen Wellenleitern angeordnet sind, auf der Basisplatte 9 angeordnet ist. An dem Substrat 2 und/oder auf der Oberfläche 90 der Basisplatte 9 ist der den festen Stützpunkt 8 bildende Körper, befestigt, an dem das Ausdehnungselement 7 abgestützt ist, das den Halterungskörper 6 und mit diesem die Endfläche 4' parallel zur Einkoppelfläche 4 verschiebt.

Die beispielhafte Koppelvorrichtung nach den Figuren 1 und 2 wirkt passiv, d, h. die Verschiebeeinrichtung 100 dieser Koppelvorrichtung kann nicht von außen beeinflußt oder gesteuert werden. Bei bevorzugten und vorteilhaften Ausführungsformen der Koppelvorrichtung ist die Verschiebeeinrichtung 100 durch eine Steuerungseinrichtung, die in den betreffenden Figuren mit 7' bezeichnet ist, gezielt von außen steuerbar, wobei die Steuerungseinrichtung 7' vorzugsweise die Ausdehnung und/oder Kontraktion des Ausdehnungselements 7 steuert.

Ein auf dem Audführungsbeispiel nach den Figuren 1 und 2 basierendes Ausführungsbeispiel einer derartigen steuerbaren Ausführungsform ist in der Figur 6 vereinfacht in Draufsicht dargestellt. Das Ausdehnungselement 7 der Verschiebeeinrichtung 100 dieses Ausführungsbeispiels besteht wie beim Beispiel nach den Figuren 1 und 2 aus Material mit einem thermischen Ausdehnungskoeffizienten $\alpha$ und die Steuerungseinrichtung 7' weist eine Einrichtung zum gesteuerten Erwärmen und/oder Kühlen des Ausdehnungselements 7 auf, die beispielsweise eine Widerstandsheizung umfassen kann. Bei Ausdehnungselementen 7 aus elektrisch leitfähigen Materialien, beispielsweise Metalle oder Halbleitermaterialien wie Silizium, kann der Heizstrom direkt durch das Teil fließen, andernfalls wird eine zusätzliche Widerstandsheizung am Ausdehnungselement 7 angebracht.

Die Steuerungseinrichtung 7' nach Figur 6 kann beim Ausführungsbeispiel nach den Figuren 1 und 2 zusätzlich vorgesehen sein, so daß dann dieses Beispiel kompensierend wirkt und zugleich und unabhängig davon von außen steuerbar ist.

Bei einer anderen steuerbaren Ausführungsform der Koppelvorrichtung besteht das Ausdehnungselement 7 aus piezoelektrischem Material und die Steuerungseinrichtung 7' erzeuge eine auf das piezoelektrische Material einwirkendes, gesteuert veränderbare elektrische Feldstärke E.

Ein Ausführungsbeispiel dieser Ausführungsform ist in der Figur 5 vereinfacht in Draufsicht dargestellt. Die Steuerungseinrichtung 7' besteht aus einer Spannungsquelle zur Erzeugung einer variablen elektrischen Spannung V, die an das Ausdehnungselement 7 angelegt wird und von außen einstellbar ist.

Die Steuerungseinrichtung 7' nach Figur 5 läßt sich auch zu einer Kompensationseinrichtung 70 auf einfache Weise dadurch erweitern, daß eine Einrichtung 71 zum Ermitteln des Positionsabstandes $\Delta x$ zwischen der relativen Istposition x und relativen Sollposition x1 und eine Steuerungseinrichtung 7' zur Erzeugung einer auf das piezoelektrische Material einwirkenden und zum ermittelten Positionsunterschied $\Delta x$ derart proportionalen elektrischen Feldstärke E vorgesehen ist, daß die von dieser Feldstärke E erzeugte piezoelektrische Ausdehnung und/oder Kontraktion des Ausdehnungselements 7 den Positionsunterschied $\Delta x$ im wesentlichen kompensiert.

Die Einrichtung 71 zum Ermitteln des Positionsabstandes $\Delta x$ kann beispielsweise ein Temperaturfühler sein, der den Positionsabstandes $\Delta x$ aus der Temperatur T in der Nähe der Koppelvorrichtung ermittelt, indem er diese Temperatur T abtastet und an die Steuerungseinrichtung 7' ein zur abgetasteten Temperatur T im wesentlichen proportionales Signal gibt, aufgrund dessen die am piezoelektrischen Ausdehnungselement 7 anliegende elektrische Feldstärke E proportional zur Temperatur T so geändert wird, daß sich die der neuen Temperatur entsprechende relative Sollposition x1 einstellt. In dieser Ausführung kann diese Kompensationseinrichtung 70 wie die Kompensationseinrichtung 70 nach den Figuren 1 und 2 oder nach der Figur 6 wirken und ist zur Temperaturkompensation beispielsweise eines Filters nach dem Phased-Array-Prinzip geeignet.

Die Einrichtung 71 zum Ermitteln des Positionsabstandes $\Delta x$ kann beispielsweise auch ein Wellenlängenabtaster sein, der den Positionsabstandes $\Delta x$ aus einer Wellenlänge des von einer Lichtquelle erzeugten und der Koppelvorrichtung zuzuführenden Lichts ermittelt, indem er diese Wellenlänge abtastet und an die Steuerungseinrichtung 7' ein zur abgetasteten Wellenlänge im wesentlichen proportionales Signal gibt, aufgrund dessen die am piezoelektrischen Ausdehnungselement 7 anliegende elektrische Feldstärke E proportional zur Wellenlänge so geändert wird, daß sich die der neuen Wellenlänge entsprechende relative Sollposition x1 einstellt. In dieser Ausführung kann diese Kompensationseinrichtung 70 zur Kompensation von temperatur- und/oder alterungsbedingten Wellenlängenänderungen von Lichtquellen verwendet werden.

Die beiden Kompensationsarten und die Steuerung von außen können bei der Ausführungsform nach Figur 5 gleichzeitig und unabhängig voneinander vorgesehen sein.

Bei einer weiteren Ausführungsform der Koppelvorrichtung weist die Verschiebeeinrichtung 100 einen Stellmotor 80 auf, wobei im Falle einer steuerbaren Ausführungsform die Verschiebeeinrichtung 100 einen von der Steuerungseinrichtung 7' gesteuerten Stellmotor 80 zum Verschieben der beiden Endflächen 4 und 4' relativ zueinander aufweist.

Ein Ausführungsbeispiel dieser Ausführungsform ist in der Figur 7 vereinfacht in Draufsicht dargestellt. Bei diesem Beispiel ist der Stellmotor 80 fest mit dem Substrat 2 und/oder der Basisplatte 9 verbunden und weist beispielsweise ein Ritzel 82 auf, das in die Zähne beispielsweise eines Stellgliedes 81 in Form einer Zahnstange eingreift, die mit dem Halterungskörper 6 verbunden ist. Eine Drehung des Ritzels 82 bewirkt ein Verschiebung der Zahnstange 81 und damit des Halterungskörpers 6 parallel zur Kante 21 des Substrats 2 relativ zum festen Stellmotor 80, so daß die Zahnstange 81 in bezug auf den festen Stellmotor 80 gewissermaßen ein dem Ausdehnungselement 7 entsprechendes Ausdehnungselement bildet.

Der Stellmotor 80 ist von außen steuerbar und wird durch eine Steuerungseinrichtung 7' gesteuert. Überdies kann eine Einrichtung 71 zum Ermitteln des Positionsunterschiedes $\Delta x$ zwischen der relativen Istposition x und relativen Sollposition x1 vorgesehen und und die Steuerungseinrichtung 7' zur Steuerung des Stellmotors 80 in Abhängigkeit vom ermittelten Positionsunterschied $\Delta x$ derart ausgebildet sein, daß der Stellmotor 80 den Positionsunterschied $\Delta x$ im wesentlichen kompensiert. Auf diese Weise ist eine Kompensationseinrichtung 70 realisiert.

Mit dem Ausführungsbeispiel nach Figur 7 können alle Funktionen des Beispiels nach Figur 5 in gleicher Weise realisiert werden.

Der Stellmotor 80 ist vorzugsweise ein Schrittmotor und Stellmotor 80 und/oder Zahnstange 81 werden vorzugsweise mikromechanisch realisiert.

Eine Koppelvorrichtung ist insbesondere in den vorstehend beschriebenen Ausführungsformen nicht nur zur Realisierung eines abstimmbaren Filters nach dem Phased-Array-Prinzip, sondern vorteilhafterweise generell zur Realisierung eines abstimmbaren integriert-optischen Mehrkanalfilters mit einem Einkoppelwellenleiter geeignet. Beispielsweise kann das optische Filter ein integriert optisches Mehrkanalfilter nach dem Spektrographen-Prinzip sein.

Ein Beispiel eines derartigen Filters ist in der Figur 11 schematisch in Draufsicht dargestellt und mit 1' bezeichnet. Dieses Filter 1' weist einen Schichtwellenleiter 3' mit einer Einkoppelendfläche 4 zum Einkoppeln von mehrere Wellenlangen enthaltendem Licht in den Schichtwellenleiter 3', einem in den Wellenleiter 3' eingebrachten, beispielsweise geätzten Reflexionsgitter 30' zum Beugen des im Wellenleiter 3' geführten eingekoppelten Lichts und einer Auskoppelendfläche 40 zum Auskoppeln des vom Gitter 30' gebeugten und im Wellenleiter 3' geführten Lichts auf. Ein optisches Mehrkanalfilter nach dem Spektrographen-Prinzip ohne erfindungsgemäße Koppelvorrichtung ist aus P.C.C. Clemens et al.; "Flat-Field-Spectrograph in $SiO_2$/Si", IEEE Photonics Technology Letters 4, 8, 886 (1992) bekannt. Mit diesem bekannten Filter ist die erfindungsgemäße Koppelvorrichtung kombinierbar.

Das Gitter 30' bildet eine Einkoppelstelle i auf der Einkoppelendfläche 4 auf eine Auskoppelstelle o1, o2, bzw. o3 (die Zahl der Auskoppelstellen ist nicht auf 3 beschränkt, sondern kann kleiner oder größer sein) auf der Auskoppelendfläche 40 des Wellenleiters 3' ab, deren Position wellenlängenabhängig ist. Wird die Position der Einkoppelstelle i in bezug auf die Einkoppelendfläche 4 verschoben, so wandert die Position der Auskoppelstellen o1, o2 und o3 entsprechend der optischen Abbildung auf der Auskoppelendfläche 40 mit, so daß auch hier ähnlich wie beim Filter 1 nach dem Phased-Array-Prinzip eine Feinabstimmung der Wellenlängenkanäle über die Position möglich ist.

Durch Anbringen einer Koppelvorrichtung an der Einkoppelendfläche 4 und/oder an der Auskoppelendfläche 40 wird aus dem Filter 1' nach Figur 11 ein abstimmbares Filter nach dem Spektrographen-Prinzip.

In den Figuren 8 und 9 sind eine mit einer Koppelvorrichtung realisierte Ausführungsform eines optischen Abschwächers und eines optischen Wellenleiterschalters schematisch in Draufsicht dargestellt.

Bei diesen Ausführungsformen sind die einander gegenüberliegenden Wellenleiter-Endflächen 4 und 4' nicht wie bei den Koppelvorrichtungen nach den Figuren 1 bis 7 die Endflächen eines Schichtwellenleiters 3 und streifenförmigen Wellenleiters 5, sondern die einander gegenüberliegenden Endflächen streifenförmiger optischer Wellenleiter 5 und 5', die im wesentlichen den gleichen Querschnitt aufweisen. Beispielsweise sind die streifenförmigen Wellenleiter 5 und 5' optische Fasern gleichen Durchmessers d.

Bei dam Abschwächer nach Figur 8 ist gegenüber der Endfläche 4' der Faser 5 nur die Endfläche 4 einer einzigen weiteren Faser 5' angeordnet.

Bei dem Wellenleiterschalter nach Figur 9 sind gegenüber der Endfläche 4' der Faser 5 nebeneinander angeordnete Endflächen 4 zweier anderer Fasern 5' angeordnet, und die Verschiebeeinrichtung ist derart ausgebildet, daß die Endfläche 4' der einen Faser 5 und die Endflächen 4 der anderen Fasern 5' relativ zueinander um zumindest einen Abstand a zwischen den benachbarten Endflächen 4 der anderen Fasern 5' verschiebbar sind.

Die anderen Fasern 5' sind sowohl beim Abschwächer als auch beim Wellenleiterschalter beispielsweise auf einem Substrat 2 gehaltert und zum Verschieben der einander gegenüberliegenden Endflächen 4 und 4' dient eine Koppelvorrichtung mit einer von außen steuerbaren Verschiebeeinrichtung 100, beispielsweise eine Verschiebeeinrichtung 100 mit einem Ausdehnungselement 7, an dem ein die Endfläche 4' haltender Halterungskörper 6 befestigt ist und das den Halterungskörper 6 bezüglich eines relativ zu der oder den Endflächen 4 festen Stützpunktes 8 verschiebt. Die erforderliche Steuerungseinrichtung zur Steuerung der Ausdehnung und/oder Kontraktion des Ausdehnungselements 7 ist in den Figuren 8 und 9 nicht dargestellt.

## Patentansprüche

1. Optisches Mehrkanalfilterbauelement bestehend aus einem optischen Mehrkanalfilter und einer Koppelanordnung zum Koppeln von Licht zwischen zwei einander gegenüber angeordneten Wellenleiter-Endflächen (4, 4'), von denen eine eine Endfläche (4) eines Einkoppelwellenleiters (3) des optischen Mehrkanalfilters (1) ist, die zum Einkoppeln von Licht in das Filter (1) dient, wobei die Ausgangswellenlänge des Filters (1) von der geometrischen Position der Einkopplung des Lichtes auf der Endfläche (4) des Einkoppelwellenleiters (3) beeinflusst wird, mit einer Verschiebeeinrichtung (100) zum Verschieben der beiden Endflächen (4, 4') relativ zueinander und parallel zu einer der Endflächen (4, 4'), wobei die Verschiebeeinrichtung (100) ein Ausdehnungselement (7) aufweist, das die Endflächen (4, 4') aufgrund einer räumlichen Ausdehnung oder Kontraktion des Elements (7) relativ zueinander bewegt, und das aus Material mit einem thermischen Ausdehnungskoeffizienten ($\alpha$) besteht, der zusammen mit einer Abmessung (1) des Ausdehnungselements (7) parallel zu einer der Endflächen (4, 4') so gewählt ist, dass eine durch eine Temperaturveränderung ($\Delta T$) verursachte Änderung der Ausgangswellenlänge des optischen Filters (1) durch die temperaturbedingte Ausdehnung oder Kontraktion des Ausdehnungselementes (7) und damit Veränderung der Position der Einkopplung des Lichtes auf der Endfläche (4) des Einkoppelwellenleiters (3) kompensiert wird.

2. Bauelement nach Anspruch 1, wobei sich das Ausdehnungselement (7) bezüglich eines relativ zu einer (4) der beiden Endflächen (4, 4') festen Stützpunktes (8) in einer Richtung parallel zur einen Endfläche (4) ausdehnt und/oder kontrahiert und dabei die andere Endfläche (4') relativ zum festen Stützpunkt (8) bewegt.

3. Bauelement nach Anspruch 1 oder 2, wobei die andere Endfläche (4') in einem parallel zur einen Endfläche (4) bewegbaren Halterungskörper (6) gehaltert ist, der fest mit dem Ausdehnungselement verbunden ist.

4. Bauelement nach Anspruch 3, wobei der Halterungskörper (6) und das Ausdehnungselement (7) einstückig ausgebildet sind.

5. Bauelement nach Anspruch 3 oder 4, wobei der Halterungskörper einstückig ist und eine durchgehende Öffnung (61) aufweist, in welcher ein die andere Endfläche (4') aufweisender Wellenleiter (5) aufgenommen und fixiert ist.

6. Bauelement nach einem der Ansprüche 3 bis 5, mit einer Führungseinrichtung (13) zum linearen Führen des Halterungskörpers (6) parallel zur einen Endfläche (4).

7. Bauelement nach Anspruch 6, wobei die Führungseinrichtung (13) zwei einander gegenüberliegende und relativ zur einen Endfläche (4) fest angeordnete Gleitflächen (90, 140) aufweist, zwischen denen der Halterungskörper (6) angeordnet und längs welchen der Halterungskörper (6) paralell zur einen Endfläche (4) verschiebbar ist.

8. Bauelement nach einem der vorhergehenden Ansprüche, wobei die Verschiebeeinrichtung (100) eine Steuerungseinrichtung (7') aufweist, mit welcher die Ausdehnung oder Kontraktion des Ausdehnungselements (7) steuerbar ist.

9. Bauelement nach Anspruch 8, wobei die Steuerungseinrichtung (7') eine Einrichtung zum gesteuerten Erwärmen oder Kühlen des Ausdehnungselementes (7) aufweist.

10. Bauelement nach einem der vorhergehenden Ansprüche, wobei die Endflächen (4, 4') einander gegenüberliegende Endflächen optischer streifenförmiger Wellenleiter (5, 5', 5'') sind, die im wesentlichen den gleichen Querschnitt aufweisen.

11. Bauelement nach Anspruch 8 oder 9, wobei die Endflächen (4, 4') einander gegenüberliegende Endflächen optischer streifenförmiger Wellenleiter (5, 5', 5'') sind, und gegenüber der Endfläche (4') eines streifenförmigen Wellenleiters (5) nebeneinander angeordnete Endflächen (4) zweier oder mehrerer anderer streifenförmiger Wellenleiter (5') angeordnet sind und die Verschiebeeinrichtung (100) derart ausgebildet ist, dass die Endfläche (4') des einen streifenförmigen Wellenleiters (5) und die Endflächen (4) des anderen streifenförmigen Wellenleiters (5') relativ zueinander um zumindest einen Abstand (d) zwischen benachbarten Endflächen (4) der anderen streifenförmigen Wellenleiter (5') verschiebbar sind.

## Claims

1. Optical multichannel filter component comprising an optical multichannel filter and a coupling arrangement for coupling light between two waveguide end faces (4, 4') which are arranged opposite one another and of which one is an end face (4) of a coupling waveguide (3) of the optical multichannel filter (1), which end face serves for coupling light into the filter (1), the output wavelength of the filter (1) being influenced by the geometrical position of the coupling of the light onto the end face (4) of the coupling waveguide (3), having a displacing device (100) for displacing the two end faces (4, 4') relative to one another and parallel to one of the end faces (4, 4'), the displacing device (100) having an expansion element (7) which moves the end faces (4, 4') relative to one another on the basis of a spatial expansion or contraction of the element (7), and which consists of a material with a coefficient of thermal expansion ($\alpha$) which is selected together with a dimension (1) of the expansion element (7) parallel to one of the end faces (4, 4') such that a change, caused by a temperature variation ($\Delta$T), in the output wavelength of the optical filter (1) is compensated by the temperature-induced expansion or contraction of the expansion element (7), and thus a variation in the position of the coupling of the light onto the end face (4) of the coupling waveguide (3) is compensated.

2. Component according to Claim 1, in which the expansion element (7) expands and/or contracts with reference to a reference point (8), fixed relative to one (4) of the two end faces (4, 4'), in a direction parallel to one end face (4) and in the process moves the other end face (4') relative to the fixed reference point (8).

3. Component according to Claim 1 or 2, in which the other end face (4') is held in a holding member (6) which can be moved parallel to one end face (4) and is permanently connected to the expansion element.

4. Component according to Claim 3, in which the holding member (6) and the expansion element (7) are constructed in one piece.

5. Component according to Claim 3 or 4, in which the holding member is unipartite and has a continuous opening (61) in which a waveguide (5) having the other end face (4') is accommodated and fixed.

6. Component according to one of Claims 3 to 5, having a guide device (13) for linearly guiding the holding member (6) parallel to one end face (4).

**7.** Component according to Claim 6, in which the guide device (13) has two sliding surfaces (90, 140) which are situated opposite one another and arranged in a fixed fashion relative to one end face (4), and between which the holding member (6) is arranged and along which the holding member (6) can be displaced parallel to one end face (4).

**8.** Component according to one of the preceding claims, in which the displacing device (100) has a control device (7') with the aid of which the expansion or contraction of the expansion element (7) can be controlled.

**9.** Component according to Claim 8, in which the control device (7') has a device for heating or cooling the expansion element (7) under control.

**10.** Component according to one of the preceding claims, in which the end faces (4, 4') are mutually opposite end faces of optical strip-shaped waveguides (5, 5', 5") which essentially have the same cross section.

**11.** Component according to Claim 8 or 9, in which the end faces (4, 4') are mutually opposite end faces of optical strip-shaped waveguides (5, 5', 5"), and there are arranged opposite the end face (4') of one strip-shaped waveguide (5) juxtaposed end faces (4) of two or more other strip-shaped waveguides (5'), and the displacing device (100) is constructed in such a way that the end face (4') of one strip-shaped waveguide (5) and the end faces (4) of the other strip-shaped waveguides (5') can be displaced relative to one another by at least a spacing (d) between adjacent end faces (4) of the other strip-shaped waveguides (5').

**Revendications**

**1.** Elément de filtrage optique à plusieurs canaux constitué d'un filtre optique à plusieurs canaux et d'un dispositif de connexion pour le couplage de lumière entre deux surfaces terminales de fibres optiques (4, 4') disposées l'une en face de l'autre, l'une étant une surface terminale (4) d'une fibre optique d'introduction (3) du filtre optique à plusieurs canaux (1) pour servir à introduire la lumière dans le filtre (1), la longueur d'onde de sortie du filtre (1) étant influencée par la position géométrique de l'introduction de la lumière sur la surface terminale (4) de la fibre optique d'introduction (3), ainsi que d'un dispositif de déplacement (100) pour déplacer les deux surfaces terminales (4, 4') l'une par rapport à l'autre et parallèlement à l'une des surfaces terminales (4, 4'), le dispositif de déplacement (100) comportant un élément de dilatation (7) qui déplace les surfaces terminales (4, 4') l'une par rapport à l'autre en fonction d'une dilatation ou d'une contraction spatiale de l'élément (7) et qui est en un matériau ayant un coefficient de dilatation thermique ($\alpha$) choisi conjointement à une dimension (1) de l'élément de dilatation (7) parallèlement à l'une des surfaces terminales (4, 4') de telle sorte qu'une variation, provoquée par une variation de température ($\Delta$T), de la longueur d'onde de sortie du filtre optique (1) est compensée par la dilatation ou la contraction, due à la température, de l'élément de dilatation (7) et donc par la variation de la position de l'introduction de la lumière sur la surface terminale (4) de la fibre optique d'introduction (3).

**2.** Elément selon la revendication 1, tel que l'élément de dilatation (7) se dilate et/ou se contracte dans une direction parallèle à une surface terminale (4) par rapport à un point de référence (8) fixe relativement à l'une (4) des deux surfaces terminales (4, 4') et déplace alors l'autre surface terminale (4') relativement au point de référence (8) fixe.

**3.** Elément selon la revendication 1 ou 2, tel que l'autre surface terminale (4') est maintenue dans un corps de fixation (6) qui est mobile parallèlement à une surface terminale (4) et qui est assemblé solidaire à l'élément de dilatation.

**4.** Elément selon la revendication 3, tel que le corps de fixation (6) et l'élément de dilatation (7) sont conçus d'un seul tenant.

**5.** Elément selon la revendication 3 ou 4, tel que le corps de fixation est d'un seul tenant et comporte une ouverture (61) traversante dans laquelle est reçue et fixée une fibre optique (5) comportant l'autre surface terminale (4').

**6.** Elément selon l'une des revendications 3 à 5, comportant un dispositif de guidage (13) pour le guidage linéaire du corps de fixation (6) parallèlement à une surface terminale (4).

**7.** Elément selon la revendication 6, tel que le dispositif de guidage (13) comporte deux surfaces de frottement (90, 140) qui sont en face l'une de l'autre et disposées fixes relativement à une surface terminale (4) et entre lesquelles le corps de fixation (6) est disposé et le long desquelles le corps de fixation (6) est mobile parallèlement à une surface terminale (4).

**8.** Elément selon l'une des revendications précédentes, tel que le dispositif de déplacement (100) comporte un dispositif de commande (7') avec lequel la dilatation ou la contraction de l'élément de dilatation (7) peut être commandée.

**9.** Elément selon la revendication 8, tel que le dispositif de commande (7') comporte un dispositif pour le réchauffement ou le refroidissement commandé de l'élément de dilatation (7).

**10.** Elément selon l'une des revendications précédentes, tel que les surfaces terminales (4, 4') sont des surfaces terminales, en face l'une de l'autre, de fibres optiques en forme de rubans (5, 5', 5") qui ont sensiblement la même section transversale.

**11.** Elément selon la revendication 8 ou 9, tel que les surfaces terminales (4, 4') sont des surfaces terminales, en face l'une de l'autre, de fibres optiques en forme de rubans (5, 5', 5"), que des surfaces terminales (4) juxtaposées de deux ou plusieurs autres fibres optiques (5') en forme de rubans sont disposées en face de la surface terminale (4') d'une fibre optique (5) en forme de ruban et que le dispositif de déplacement (100) est conçu de telle sorte que la surface terminale (4') d'une fibre optique (5) en forme de ruban et les surfaces terminales (4) des autres fibres optiques (5') en forme de rubans peuvent être déplacées les unes par rapport aux autres d'au moins une distance (d) entre des surfaces terminales voisines (4) des autres fibres optiques (5') en forme de rubans.

FIG 1

FIG 2

# FIG 3

# FIG 4

FIG 5

FIG 6

FIG 7

## FIG 8

## FIG 9

# FIG 10

# FIG 11